# EUROPÄISCHE PATENTSCHRIFT

(11) **EP 1 715 936 B1**
(45) Veröffentlichungstag und Bekanntmachung des Hinweises auf die Patenterteilung: **08.06.2011**
(21) Anmeldenummer: 04765673.1
(22) Anmeldetag: 29.09.2004
(51) Int. Cl.: B01D 35/30

(54) **FILTERVORRICHTUNG**
FILTER DEVICE
DISPOSITIF DE FILTRATION

(30) Priorität: 18.02.2004 DE 102004008879
(43) Veröffentlichungstag der Anmeldung: 02.11.2006
(73) Patentinhaber: HYDAC FILTERTECHNIK GMBH, 66280 Sulzbach (DE)
(72) Erfinder: KLEIN, Volkmar, 66482 Zweibrücken (DE); SANN, Norbert, 66292 Riegelsberg (DE)
(74) Vertreter: Bartels, Martin Erich Arthur
(86) Internationale Anmeldenummer: PCT/EP2004/010868
(87) Internationale Veröffentlichungsnummer: WO 2005/089899

(56) Entgegenhaltungen:
- EP-A- 0 153 965
- EP-A- 0 492 627
- EP-A1- 0 153 965
- DE-C- 19 917 031
- US-A- 2 354 238
- US-A- 5 607 582
- US-B1- 6 579 455

## Beschreibung

Die Erfindung betrifft eine Filtervorrichtung mit mindestens einem Filterelement, das in einem Filtergehäuse aufnehmbar ist, das über Fluidanschlüsse mit einer Fluideinrichtung, insbesondere in Form eines Hydrauliktanks, mittels einer Anschlußeinrichtung fluidführend verbindbar ist gemäß der Merkmalsausgestaltung des Oberbegriffes des Patentanspruches 1.

Dahingehende Filtervorrichtungen sind in einer Vielzahl von Bau- und Ausführungsformen auf dem Markt frei erhältlich. Sie dienen dabei unter anderem dazu Verschmutzungen in Fluiden, wie Hydrauliköl aus diesen herauszufiltrieren. Verschmutzungen des Hydrauliköles erfolgen bei der Montage und bei der Inbetriebnahme der jeweiligen Hydraulikanlage, und neben dieser Anfangsverschmutzung kann es zu Verschmutzungen während des Betriebes kommen, beispielsweise durch Eindringen von Schmutz am Hydrauliktank durch unzureichende Tankbelüftung, Rohrdurchführungen, Kolbenstangenabdichtungen und dergleichen mehr. Sofern es bei Hydraulikanlagen von Arbeitsmaschinen, wie Erdbewegungsmaschinen, Baggern oder dergleichen zu Verschmutzungen innerhalb des im Hydrauliktank bevorrateten Fluids kommt, kann es zweckmäßig sein, die Filtration unmittelbar im Bereich des Hydrauliktanks zu veranlassen, beispielsweise indem man die Filtervorrichtung direkt an dem Tank anbringt, und das von dort entnommene Hydrauliköl wird direkt zur Abfiltrierung von Verschmutzungen einem Filterelement zugeführt, das in einem Filtergehäuse aufgenommen ist, und das derart abgereinigte Fluid tritt dann über das Filtergehäuse wieder zurück in den Tank. Hierbei sind Anbaulösungen bekannt, bei denen die Filtervorrichtung nur den Tankinhalt reinigt; es sind aber auch Lösungen denkbar, bei denen die Filtervorrichtung entsprechend abfiltriertes und gereinigtes Fluid in einen Hydraulikkreis der Arbeitsmaschine fördert, um von dort das Fluid in den Tank rückzufördern, das bei einem dahingehenden Umlauf im Hydraulikkreis eine Verschmutzung auch mit Feststoffteilen erfährt.

Bei den Lösungen, bei denen die Filtervorrichtung nur den Tankinhalt filtriert, in dem Fluid aus dem Tank entnommen, filtriert und dann gleich wieder in den Tank zurückgegeben wird, kann es zweckmäßig sein, um Unterbrechungen beim Betrieb der jeweiligen Hydraulikanlage zu vermeiden, den Inhalt der Fluideinrichtung, insbesondere in Form des Hydrauliktanks gegenüber dem Filtergehäuse abzusperren, um dergestalt ein verschmutztes und somit verbrauchtes Filterelement gegen ein neues auszutauschen, oder für einen dahingehenden Filterelementwechsel das Filtergehäuse mit verbrauchtem Filterelement vollständig von der Fluideinrichtung in Form des Tanks abzubauen. Nach einer entsprechenden Wartung der Baueinheit von Filtergehäuse mit Filterelement, insbesondere durch Austausch eines verbrauchten Filterelementes gegen ein neues, kann dann die dahingehende Baueinheit wieder an die Fluideinrichtung für ihren Gebrauch angeschlossen werden. Auch besteht die Möglichkeit, eine neue Baueinheit von Filtergehäuse mit unverbrauchtem Filterelement an die Fluideinrichtung anzuschließen, während bei der anderen bereits beschriebenen abmontierten Baueinheit, der Filterelementwechsel vorgenommen wird. Hierfür sind bei den bekannten Lösungen in komplizierter Weise Verrohrungen voneinander zu trennen, und dichtend zu verschließen oder über kompliziert aufbauende Drehschieberteile sind die Fluidanschlüsse zwischen Fluideinrichtung (Tank) und dem Filtergehäuse mit Filterelement zu trennen und später wieder zu verbinden, wobei die genannten Drehschieberteile als Bestandteil einer Anschlußeinrichtung zwischen Filtergehäuse und Fluideinrichtung nicht nur teuer in der Herstellung und aufwendig in der Wartung sind, sondern auch die Gefahr in sich bergen, dass entsprechend große Mengen an Fluid als eine Art Leckölstrom aus der Fluideinrichtung austreten, was zu Verschmutzungsproblemen in der Umgebung führt. Auch sind diese Lösungen störanfällig im Betrieb, und insoweit wenig funktionssicher, da eine Bedienperson häufig Probleme hat, an der eingenommenen Position der Drehschieberteile zu erkennen, ob diese gerade in ihrer Sperr- oder in ihrer Öffnungsstellung sind.

Ein Vertreter der letztgenannten Lösung ist durch das US-Patent 5 607 582 bekannt, das eine gattungsgemäße Filtervorrichtung zeigt mit mindestens einem Filterelement, das in einem Filtergehäuse aufnehmbar ist, das über Fluidanschlüsse mit einer Fluideinrichtung, insbesondere in Form eines Hydrauliktanks, mittels einer Anschlußeinrichtung fluidführend verbindbar ist, wobei die Anschlußeinrichtung mit mindestens einem Sperrteil versehen ist, das in einer Sperrstellung den ihm jeweils zuordenbaren Fluidanschluß sperrt, und nach Verschieben in eine Öffnungsstellung diesen freigibt. Als Sperrteile sind bei der bekannten Lösung zwei Drehschieberteile eingesetzt, von denen ein Drehschieberteil dem Filterelement zugeordnet ist und das andere Drehschieberteil der Anschlußeinrichtung. Im Betrieb der Filtervorrichtung, bei dem das Filterelement in das zugehörige Filtergehäuse eingesetzt ist, sind die Fluidöffnungen von Filterelement, den beiden Drehschieberteilen sowie der Anschlußeinrichtung für eine ungestörte Fluidführung in Deckung miteinander. Soll das Filterelement aus dem Filtergehäuse entnommen werden, beispielsweise um dieses gegen ein Neuelement zu tauschen, ist der Deckel des Filtergehäuses zu entfernen, der eine Handhabe am Filterelement freigibt und bei Drehung der Handhabe nebst Filterelement um dessen Längsachse werden die Drehschieberteile um jeweils 90° mit verschwenkt, so dass die Fluiddurchlässe in den Drehschieberteilen von Wandungsteilen sowohl des Filterelementes als auch der Anschlußeinrichtung abgedeckt und insoweit gesperrt sind. Das Filterelement wird dann mit seinem in Sperrstellung befindlichen Drehschieberteil aus dem Filtergehäuse entfernt und das verbleibende Drehschieberteil der Anschlußeinrichtung sperrt deren Fluidanschluß ab. Nach Einsetzen des neuen Filterelementes mit Drehschieberteil läßt sich dann in umgekehrter Drehfolge die eingangs erwähnte Fluidanschlußverbindung wieder herstellen, bei der die einzelnen Fluidanschlüsse wieder in Deckung miteinander sind.

Durch die EP-A-0 153 965 ist eine weitere gattungsgemäße Filtervorrichtung bekannt mit einem patronenartigen Filterelement, das in einem Filtergehäuse aufnehmbar ist, das über Fluidanschlüsse mit einer Fluideinrichtung mittels einer Anschlußeinrichtung der Filtervorrichtung fluidführend verbindbar ist, wobei die Anschlußeinrichtung mit mindestens einem Sperrteil als Teil derselben versehen ist, das in einer Sperrstellung den ihm jeweils zuordenbaren Fluidanschluß sperrt, und nach Verschieben in eine Öffnungsstellung diesen freigibt. Bei der bekannten Lösung ist das von Hand mittels einer Handhabe betätigbare Sperrteil in der Art eines zylindrischen Sperrschieberkolbens ausgebildet.

Ausgehend von diesem Stand der Technik liegt der Erfindung die Aufgabe zugrunde, die erfindungsgemäßen Filtervorrichtungen dahingehend weiter zu verbessern, dass sie in platzsparender Weise und funktionssicher mit geringem Herstell-, Montage- und Wartungsaufwand die vorstehend beschriebenen Erfordernisse an ihre Funktion erfüllen. Eine dahingehende Aufgabe löst eine Filtervorrichtung mit den Merkmalen des Patentanspruches 1 in seiner Gesamtheit.

Dadurch, dass gemäß dem kennzeichnenden Teil des Patentanspruches 1 das Sperrteil als plattenförmiges Schieberteil ausgebildet ist, das zwischen zwei Anschlußplatten der Anschlußeinrichtung mittels einer Dichteinrichtung dichtend längsverschiebbar geführt ist, von denen eine dem Filtergehäuse und die andere der Fluideinrichtung zugewandt ist, dass man dem Schieberteil von außen her ansieht, in welcher Funktionsstellung es ist, und dass die dem Filtergehäuse zuordenbaren Teile der Fluidanschlüsse mit jeweils einem Ventil versehen sind, ist eine Art Sperrschieberlösung realisiert, die es erlaubt, mit nur einem zeitlich kurzen Betätigungsvorgang die genannten Fluidanschlüsse zu sperren oder freizugeben, um einen Filterelementwechsel für das verbrauchte Filtermedium vorzunehmen bzw. das Filterelement im Filtergehäuse bevorratet für die in Rede stehenden Filtrationsaufgaben wieder einzusetzen. Da man dem Sperrschieber von außen her ansieht, in welcher Funktionsstellung er ist, ist es für eine Bedienperson ohne weiteres auch plausibel, welche Funktionsstellung die Filtervorrichtung gerade einnimmt. Aufgrund der Ausgestaltung des Sperrteiles als längsverschiebbaren Sperrschieber benötigt dieser wenig Einbauraum und kann dergestalt auch bei beengten Montageverhältnissen ohne weiteres eingesetzt werden. Die lineare Verschiebebewegung des Sperrteils läßt sich mechanisch einfach und gut beherrschen, was zum einen die Herstell-, Montage- und Wartungskosten senken hilft, und zum anderen ist auch bei schwierigen Umgebungsbedingungen eine sichere Funktion für die Anschlußeinrichtung als Sperr- und Freigabeeinrichtung verwirklicht.

Mit der erfindungsgemäßen Filtervorrichtung ist es möglich, die aus einem Filterelement und einem Filtergehäuse gebildete Baueinheit von der sonstigen Fluideinrichtung fluiddicht abzutrennen, um dergestalt vor Ort, also an der Fluideinrichtung, einen Elementwechsel des verbrauchten Filterelementes gegen ein neues vorzunehmen; es besteht aber auch vorzugsweise die Möglichkeit, die dahingehende Baueinheit von der Fluideinrichtung komplett abzunehmen, und an einer anderen Stelle den Elementwechsel zu veranlassen, wobei dann noch weitere Wartungshandlungen vorgenommen werden können. Der angesprochene Elementwechsel dauert nur Sekunden und mit der erfindungsgemäßen Lösung ist auch sichergestellt, dass nicht Fluid (Öl) in die Umgebung austreten kann, was ansonsten zur Umweltverschmutzung führen könnte.

Weitere vorteilhafte Ausführungsformen der erfindungsgemäßen Filtervorrichtung sind Gegenstand der sonstigen Unteransprüche.

Im folgenden wird die erfindungsgemäße Filtervorrichtung anhand eines Ausführungsbeispieles nach der Zeichnung näher erläutert. Dabei zeigen in prinzipieller und nicht maßstäblicher Darstellung die
- Fig. 1: in der Art einer Schnittzeichnung, die wesentlichen Komponen- ten der Filtervorrichtung, wobei die aus Filtergehäuse und Filterelement bestehende Baueinheit von der Fluideinrichtung getrennt ist;
- Fig. 2: eine der Fig. 1 entsprechende Darstellung, im Zusammen- bauzustand;
- Fig. 3: in perspektivischer Ansicht die Filtervorrichtung gemäß den Darstellungen nach den Fig. 1 und 2, wobei die in Blick- richtung auf die Fig. 3 gesehen linke Darstellung der Fig. 1 entspricht und die rechte Darstellung der Fig. 2, wobei die mittlere Darstellung eine Zwischenstellung wiedergibt.

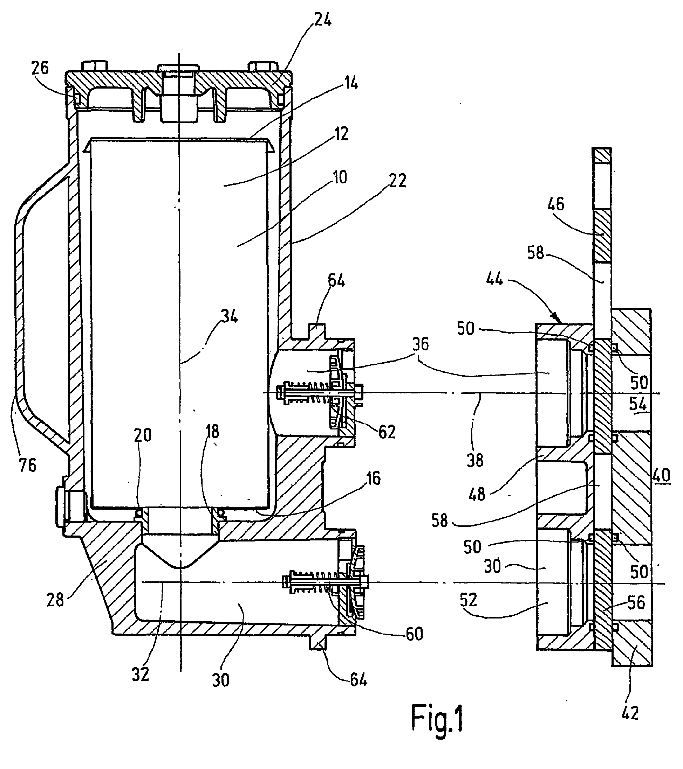

Die in den Figuren gezeigte Filtervorrichtung weist ein zylindrisches Filterelement 10 üblicher Bauart auf. Das Filterelement 10 dient dazu Verschmutzungen, insbesondere in Form von Feststoffteilen aus einem Fluidstrom, wie einem Hydraulikmedium abzufiltrieren. Hierzu ist das Filterelement 10 mit einer vorzugsweise plissierten Filtermatte 12 versehen, die sich im Inneren an einem perforierten Stütz rohr (nicht dargestellt) abstützt. Des weiteren ist die dahingehend zylind risch aufgebaute Filtermatte 12 zwischen zwei Endkappen 14, 16 aufgenommen. Der dahingehende Elementaufbau ist üblich und Stand der Technik, so dass an dieser Stelle hierauf nicht mehr näher eingegangen wird. Die obere Endkappe 14 kann zusätzlich mit einer Bypasseinrichtung, beispielsweise einem Bypassventil (nicht dargestellt) ausgestattet sein, um dergestalt sicher zu stellen, dass bei von Verschmutzungen zugesetztem Filterelement 10 der Fluidstrom über die Endkappen 14, 16 das Filterelement 10 frei passieren kann, um so Hemmnisse im Betrieb der Fluid- oder Hydroanlage zu vermeiden. Die in Blickrichtung auf die Fig. 1 gesehen, untere Endkappe 16 ist längs eines zylindrischen Aufnahmestutzens 18 gehalten, und über einen Dichtring 20 gegenüber diesem abgedichtet.

Insoweit ist das Filterelement 10 über den Aufnahmestutzen 18 in einem zylindrischen Filtergehäuse 22 aufnehmbar. Für den Wechsel des verschmutzten Filterelementes 10 gegen ein neues Filterelement 10, weist das Filtergehäuse 22 an seiner Oberseite ein abnehmbares Deckelteil 24 auf, das im übrigen über einen weiteren Dichtring 26, gegenüber der Innenseite des sonstigen Filtergehäuses 22 abgedichtet ist. Das im wesentlichen zylindrische Filtergehäuse 22 verjüngt sich in Blickrichtung auf die Fig. 1 gesehen nach unten hin, und weist im Bereich dieser Verjüngung 28 einen Fluidanschluß 30 auf, der fluidführend über den Aufnahmestutzen 18 mit dem Inneren des Filterelementes 10 in Verbindung steht. Ferner nimmt die Längsachse 32 des Fluidanschlusses 30 einen rechten Winkel ein, zu der Längsausrichtung bzw. Längsachse 34 des Filtergehäuses 22. Darüberliegend ist ein weiterer Fluidanschluß 36 vorhanden, dessen Längsachse 38 ebenfalls senkrecht auf der Längsachse 34 des Filtergehäuses 22 steht. Die Durchmesser der beiden Fluidanschlüsse 32, 36 entsprechen einander, wobei der Fluidanschluß 30 den Fluidauslaß und der weitere Fluidanschluß 36 den Fluideinlaß der Filtervorrichtung bildet. Insoweit strömt verschmutztes Fluid über den Fluideinlaß 36, in das Innere des Filtergehäuses 22 und durchströmt dort von außen nach innen das Filterelement 10 mit seiner Filtermatte 12. Etwaige im Fluidstrom befindliche Verunreinigungen, insbesondere in Form von Feststoffpartikeln, bleiben dann an der Filtermatte 12 hängen, und das derart abgereinigte Fluid tritt über das Innere des Filterelementes 10, sowie den Aufnahmestutzen 18 auf die Seite des Fluidanschlusses 30 und gerät mithin, insoweit auf die Auslaßseite der Filtervorrichtung.

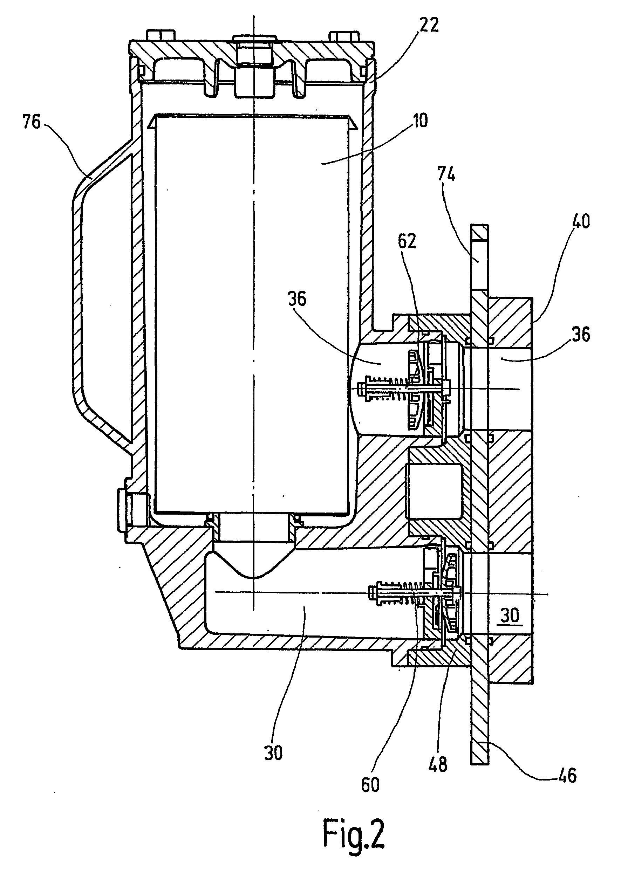

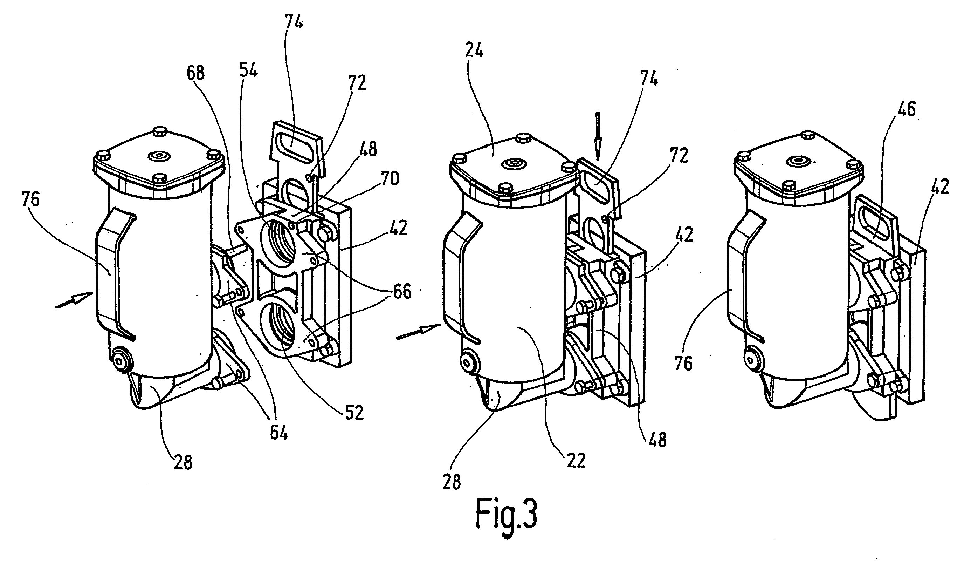

Die beiden Fluidanschlüsse 30, 36 lassen sich mit einer Fluideinrichtung, insbesondere in Form eines Hydrauliktanks 40 verbinden, wobei in den Figuren von dem Hydrauliktank 40 nur ein Teil in Form einer vorderen Anschlußplatte 42 wiedergegeben ist. Mittels einer als Ganzes mit 44 bezeichneten Anschlußeinrichtung läßt sich die aus Filtergehäuse 22 nebst Filterelement 10 bestehende Baueinheit an die Fluideinrichtung, vorzugsweise in Form des Hydrauliktankes 40 ankoppeln bzw. wieder lösen. Die Anschlußeinrichtung 44 ist mit einem längsverschiebbaren Sperrteil 46 versehen, das in einer Sperrstellung (vgl. Fig. 1 und Fig. 3 linke und mittlere Darstellung) den ihm jeweils zuordenbaren Fluidanschluß 30, 36 sperrt und nach Verschieben in eine Öffnungsstellung (vgl. Fig. 2 und Fig. 3 rechte Darstellung) diese Fluidanschlüsse 30, 36 freigibt.

Das Sperrteil 46 ist als plattenförmiges Schieberteil ausgebildet, das zwischen der vorderen Anschlußplatte 42 und einer weiteren Anschlußplatte 48 der Anschlußeinrichtung 44, mittels einer Dichteinrichtung 50 dichtend geführt ist. Wie bereits dargelegt, ist dabei die eine Anschlußplatte 42 der Fluideinrichtung bzw. dem Tank 40 zugewandt, und die weitere zweite Anschlußplatte 48 der Baueinheit aus Filtergehäuse 22 nebst Filterelement 10. Sowohl das Schieberteil als auch die beiden Anschlußplatten 42, 48 sind im wesentlichen rechteckförmig ausgebildet. Die jeweilige Dichteinrichtung 50 besteht aus einer üblichen Ringdichtung zwischen den jeweiligen Anschlußplatten 42, 48 und dem dazwischen mittig geführten Schieberteil als Sperrteil 46. Insoweit umgreift die jeweilige Dichteinrichtung 50 ringförmig die in den beiden Anschlußplatten 42, 48 verlaufenden Fluiddurchlässe 52, 54, die mit ihren Längsachsen korrespondierend zu den Längsachsen 32, 38 der Fluidanschlüsse 30 bzw. 36 verlaufen. Die Fig. 1, die die Sperrstellung des Sperrteils 46 betrifft, zeigt, dass die dah ingehenden Fluiddurchlässe 52, 54 von Wandteilen 56 desselben abgedeckt und in der Öffnungsstellung gemäß der Darstellung nach der Fig. 2 freigehalten sind.

Die beiden Fluidanschlüsse 30, 36 des Filtergehäuses 22 sind also in Längsrichtung desselben übereinander angeordnet ebenso wie die Fluiddurchlässe 52, 54 in den Anschlußplatten 42, 48 der Anschlußeinrichtung 44. Zwischen den sperrenden Wandteilen 56 des Sperrteiles 46 weist dieses wiederum zylindrisch gehaltene Freigabeöffnungen 58 auf, die in der Öffnungsstellung des Sperrteiles 46 (vgl. Fig. 2) in fluidführender Deckung mit den Fluiddurchlässen 52, 54 der Anschlußeinrichtung 44 sind. In der dahingehenden Öffnungsstellung sind die Bohrungslängsachsen aller einander zugeordneten Anschlüsse als in einer Linie verlaufend anzusehen, so dass dergestalt nicht unnütze Kanten entstehen, die gegebenenfalls zu Kavitationen oder Verwirbelungen führen könnten. Des weiteren münden die in Rede stehenden Bohrungen für den Fluiddurchtritt in einer gemeinsamen Ebene, sowohl bezogen auf die Außenkontur des Filtergehäuses 22 als auch bezogen auf die Außenkontur der Anschlußeinrichtung 44. Des weiteren sind die beiden Fluidanschlüsse 30, 36 des Filtergehäuses 22 mit jeweils einem Ventil 60, 62 versehen. Dabei steht der Ventilteller des einen am Fluidauslaß 30 angeordneten Ventiles 60 über diesen nach außen hin vor, und der Ventilteller des anderen am Fluideinlaß 36 angeordneten Ventiles 62 ist in diesen integriert. Der jeweilige Ventilteller öffnet wie dargestellt entgegen der Wirkung der Rückstellkraft einer Druckfeder, wobei der jeweilige Ventilteller eine konvexe Wölbung aufweist, die der Strömungsrichtung des anzusteuernden Fluides entgegen gerichtet ist.

Wie sich des weiteren aus den Figuren ergibt, sind die Fluidanschlüsse 30, 36 des Filtergehäuses 22 jeweils außenumfangseitig, von einem flanschartigen Festlegeteil 64 umgriffen. Die dahingehenden Festlegeteil 64 dienen dem Festlegen des Filtergehäuses 22 an zuordenbaren Flanschteilen 66 der ihm zugewandten weiteren Anschlußplatte 48, die jeweils die Fluidanschlüsse 53, 54 umgreifen. Dahingehend läßt sich über eine übliche Schraubverbindung die Baueinheit von Filtergehäuse 22 mit Filterelement 10 an der Anschlußeinrichtung 44 und mithin an der Fluideinrichtung in Form des Hydrauliktankes 40 stationär festlegen. In Blickrichtung auf die Fig. 3 gesehen, weist die ganz links angeordnete Darstellung für das obere Festlegeteil 64 ein Sicherungsteil in Form eines Sicherungsstiftes 68 auf. Für den Durchgriff des dahingehenden Sicherungsstiftes 68 weist die in Blickrichtung auf die Figur gesehen zuvorderst angeordnete weitere Anschlußplatte 48 eine durchgehende Ausbohrung 70 auf, die in Deckung bringbar ist mit einer Ausnehmung 72 im Sperrteil 46, sobald die Baueinheit an der Anschlußeinrichtung 44 festgelegt ist und das schieberförmige Sperrteil 46 seine Öffnungsstellung gemäß der Darstellung nach der Fig. 2 sowie der Fig. 3 ganz rechts dargestellt, eingenommen hat. Auf diese Art und Weise ist eine Plausibilitätsüberprüfung erreicht und Fehlbedienungen weitestgehend ausgeschlossen, da sich die aus Filtergehäuse 22 nebst Filterelement 10 bestehende Baueinheit nur dann Festlegen läßt, wenn eben der Sicherungsstift 68 in die Ausnehmung 72 von seinem freien Ende her stirnseitig eingerastet ist. Anschließend werden dann die Schrauben von Festlegeteilen 64 und Flanschteilen 66 angezogen, um derart den Festlegevorgang zu vervollständigen. Auch ist über den dahingehend rastenden Eingriff des Sicherungsstiftes 68 erreicht, dass nicht ungewollt das schieberartige Sperrteil 46 in seine Schließstellung gemäß der Darstellung nach der Fig. 1 gelangt.

Das Sperrteil 46 weist in Blickrichtung auf die Figuren gesehen an seiner Oberseite eine Handhabe 74 auf, die ein Durchgriffsloch bildet, in die die Hand einer Bedienperson entsprechend eingreifen kann. Des weiteren weist das Filtergehäuse 22 auf seiner der Anschlußeinrichtung 44 abgewandten Seite eine weitere Handhabe 76 in Form eines Griffbügels auf, über den sich die Baueinheit bestehend aus Filtergehäuse 22 nebst Filterelement 10 wiederum durch eine Bedienperson sinnfällig handhaben läßt. Das Filtergehäuse 22 selbst besteht vorzugsweise aus Aluminiumdruckguß und das Sperrteil 46 kann aus einem Stahl- oder einem Kunststoffwerkstoff bestehen.

Unter Bezugnahme auf die Figur 3 soll nunmehr der wesentliche Funktionsablauf bezogen auf die erfindungsgemäße Filtervorrichtung näher erläutert werden.

In Blickrichtung auf die Fig. 3 ganz links gesehen, befindet sich das Sperrteil 46 in seiner oberen sperrenden Stellung wie sie in der Fig. 1 wiedergegeben ist. In der dahingehenden Sperrstellung decken die durchgehenden Wandabschnitte 56 die Fluiddurchlässe 52, 54 ab. Auf Seiten der Fluideinrichtung 40 in Form des Hydrauliktanks soll ein Betriebsüberdruck von beispielsweise 10 bar herrschen. Aufgrund der Federkraft-Unterstützung sind die Ventile 60, 62 geschlossen und das Filtergehäuse 22 soll unter Bildung einer Baueinheit ein neues unverbrauchtes Filterelement 10 aufweisen. Gemäß der mittleren Darstellung nach der Fig. 3 ist dort eine Zwischenstellung wiedergegeben, bei dem die Schrauben von Festlegeteilen 64 und Flanschteilen 66 bereits in Eingriff miteinander stehen und der Sicherungsstift 68 hat bereits die Bohrung 70 in der Anschlußplatte 48 durchgriffen und er liegt mit seinem freien Ende an der Oberseite des plattenförmigen Sperrteiles 46 an. Nun wird das Sperrteil 46 weiter nach unten bewegt, und nimmt dann seine Öffnungsstellung ein, gemäß der Darstellung nach der Fig. 3 ganz rechts gesehen. Da die Handhabe 74 an der Stelle des Überganges zu der Ausnehmung 72 mit Anschlagschultern versehen ist, legen diese sich auf die zugeordneten Teile oben an der Anschlußplatte 48 an, so dass insoweit verhindert ist, dass das Sperrteil 46 aus der gebildeten Führung zwischen den beiden Anschlußplatten 42, 48 nach unten hin durchrutschen kann, und die Ausnehmung 72 ist nunmehr derart positioniert, dass der Sicherungsstift 68 in Eingriff kommt, sobald die Schraubverbindungen nunmehr definitiv festgelegt werden. Die dahingehende Funktions- oder Öffnungsstellung ist entsprechend dem Schnitt in der Fig. 2 wiedergegeben. Aufgrund des anstehenden Fluiddruckes auf Seiten der Fluideinrichtung 40 wird nunmehr das in Blickrichtung auf die Fig. 2 gesehen zuoberst angeordnete Ventil 62 aufgestoßen, und verschmutztes Fluid kann in die Filtervorrichtung für einen Abreinigungsvorgang durch das Filterelement 10 eintreten. Das gereinigte Fluid verläßt dann das Filtergehäuse 22 über das weitere zweite Ventil 60, dass dahingehend öffnet, in dem der Ventilteller in Richtung des Fluiddurchlasses 52 aufgedrückt wird.

Für einen Abkoppeivorgang der Baueinheit von der Anschlußeinrichtung 44 erfolgen die genannten Festlegevorgänge in umgekehrter Reihenfolge, und das schieberförmige Sperrteil 46 verschließt die Fluideinrichtung 40, wohingegen die Ventile 60, 62 einen sicheren Abschluß des Filtergehäuses 22 mit seinem Inhalt gegenüber der Umgebung ermöglichen. Das verbrauchte Filterelement 10 kann nun an anderer geeigneter Stelle abgereinigt oder gegebenenfalls gegen ein neues Element ausgetauscht werden. Da die Fluideinrichtung gegenüber der Umgebung über das Sperrteil 46 abgesperrt ist, kann insoweit kein Öl aus dem System in die Umgebung austreten. In weiterer Ausbildung der erfindungsgemäßen Lösung kann es auch denkbar sein, zwar über das Sperrteil 46 die Fluideinrichtung von der Baueinheit und mithin von dem Filtergehäuse 22 abzukoppeln; vor Ort dann aber, also direkt an der Arbeitsmaschine, nach Lösen des Deckelteiles 24 einen Elementtausch vorzunehmen. Des weiteren können an Stelle nur eines Sperrteiles 46 auch mehrere Sperrteile oder Schieber einer jeden Fluidöffnung zugeordnet, die sperrende Funktion wahrnehmen. Ein Stillsetzen der hydraulischen Anlage für einen Austausch- oder Wartungsvorgang ist aber auch insoweit nicht notwendig.

## Patentansprüche

1. Filtervorrichtung mit mindestens einem Filterelement (10), das in einem Filtergehäuse (22) aufnehmbar ist, das über Fluidanschlüsse (30, 36) mit einer Fluideinrichtung der Filtervorrichtung, insbesondere in Form eines Hydrauliktanks (40), mittels einer Anschlußeinrichtung (44) der Filtervorrichtung fluidführend verbindbar ist, wobei die Anschlußeinrichtung (44) mit mindestens einem Sperrteil (46) als Teil derselben versehen ist, das in einer Sperrstellung den ihm jeweils zuordenbaren Fluidanschluß (30, 36) sperrt, und nach Verschieben in eine Öffnungsstellung diesen freigibt, **dadurch gekennzeichnet, dass** das Sperrteil (46) als plattenförmiges Schieberteil ausgebildet ist, das zwischen zwei Anschlußplatten (42, 48) der Anschlußeinrichtung (44) mittels einer Dichteinrichtung (50) dichtend längsverschiebbar geführt ist, von denen eine (48) dem Filtergehäuse (22) und die andere (42) der Fluideinrichtung (40) zugewandt ist, dass man dem Schieberteil von außen her ansieht, in welcher Funktionsstellung es ist, und dass die dem Filtergehäuse (22) zuordenbaren Teile der Fluidanschlüsse (30,36) mit jeweils einem Ventil (60,62) versehen sind.

2. Filtervorrichtung nach Anspruch 1, **dadurch gekennzeichnet, dass** die Fluidanschlüsse (30, 36) zumindest teilweise aus einem Fluideinlaß (36) und einem Fluidauslaß (30) im Filtergehäuse (22) gebildet sind, und dass die Anschlußplatten (42, 48) mit dazu korrespondierenden Fluiddurchlässen (52, 54) als Teil der Fluidanschlüsse (30, 36) versehen sind, die in der Sperrstellung des Sperrteiles (46) von Wandteilen (56) desselben abgedeckt und in der Öffnungsstellung freigegeben sind.

3. Filtervorrichtung nach Anspruch 2, **dadurch gekennzeichnet, dass** die beiden Anschlußstellen des Filtergehäuses (22) als Bestandteil der Fluidanschlüsse (30, 36) in Längsrichtung (34) desselben übereinander angeordnet sind, ebenso wie die Fluiddurchlässe (52, 54) in den Anschlußplatten (42, 48) der Anschlußeinrichtung (44) und dass zwischen den sperrenden Wandteilen (56) des Sperrteiles (46) dieses Freigabeöffnungen (58) aufweist, die in der Öffnungsstellung des Sperrteiles (46) in fluidführender Deckung mit den Fluiddurchlässen (52, 54) der Anschlußeinrichtung (44) sind.

4. Filtervorrichtung nach einem der Ansprüche 1 bis 3, **dadurch gekennzeichnet, dass** der Ventilteller des einen am Fluidauslaß (30) des Filtergehäuses (22) angeordneten Ventiles (60) über diesen nach außen hin übersteht und der Ventilteller des anderen am Fluideinlaß (36) des Filtergehäuses (22) angeordneten Ventils (62) in diesen integriert ist.

5. Filtervorrichtung nach einem der Ansprüche 1 bis 4, **dadurch gekennzeichnet, dass** die dem Filtergehäuse (22) zuordenbaren Fluidanschlüsse (30, 36) jeweils außenumfangseitig von einem Festlegeteil (64) umgriffen sind, das dem Festlegen des Filtergehäuses (22) an zuordenbaren Flanschteilen (66) an der ihm zugewandten Anschlußplatte (48) dient, die jeweils die Fluiddurchlässe (52, 54) umgreift.

6. Filtervorrichtung nach Anspruch 5, **dadurch gekennzeichnet, dass** mindestens ein Sicherungsteil, vorzugsweise in Form eines Sicherungsstiftes (68) am Festlegeteil (64) angeordnet das zuordenbare Flanschteil (66) durchgreift und in eine Ausnehmung (72) im Sperrteil (46) eingreift, sobald dieses seine Öffnungsstellung einnimmt.

7. Filtervorrichtung nach einem der Ansprüche 1 bis 6, **dadurch gekennzeichnet, dass** das Sperrteil (46) und das Filtergehäuse (22) für eine Betätigung bzw. für einen Haltevorgang von Hand, jeweils mit einer Handhabe (74, 76) versehen sind.

8. Filtervorrichtung nach einem der Ansprüche 1 bis 7, **dadurch gekennzeichnet, dass** das Filtergehäuse (22) aus Aluminiumguß und das Sperrteil (46) aus einem Stahl- oder Kunststoffwerkstoff besteht.

## Claims

1. A filter device having at least one filter element (10) which can be held in a filter housing (22) which can be connected to carry fluid by means of fluid connections (30, 36) to a fluid means of the filter apparatus, especially in the form of a hydraulic tank (40), by means of a connecting device (44) of the filter device, the connecting device (44) being provided with at least one blocking part (46) as a part of the latter which blocks the respective fluid connection (30, 36) which can be assigned to it in a blocking position, and after displacement into an open position clears the latter, **characterised in that** the blocking part (46) is in the form of a plate-shaped sliding part which is guided with longitudinal displacement sealed between two connecting plates (42, 48) of the connecting device (44) by means of a sealing device (50), one of which is facing the filter housing (22), and the other (42) is facing the fluid means (40), that one sees from the outside in which functional position the sliding part is, and that the parts of the fluid connections (30, 36) assignable to the filter housing (22) are respectively provided with a valve (60, 62).

2. The filter device according to Claim 1, **characterised in that** the fluid connections (30, 36) are formed at least partially from a fluid inlet (36) and a fluid outlet (30) in the filter housing (22), and that the connecting plates (42, 48) are provided with fluid passages (52, 54) which correspond thereto as part of the fluid connections (30, 36) which in the blocking position of the blocking part (46) are covered by wall parts (56) of the latter and are cleared in the open position.

3. The filter device according to Claim 2, **characterised in that** the two connecting sites of the filter housing (22) as a component of the fluid connections (30, 36) in the longitudinal direction (34) of the latter are located on top of each other, like the fluid passages (52, 54) in the connecting plates (42, 48) of the connecting device (44), and that between the blocking wall parts (56) of the blocking part (46) of the latter has clearance openings (58) which in the open position of the blocking part (46) are congruent with the fluid passages (52, 54) of the connecting device (44) so as to carry fluid.

4. The filter device according to any of Claims 1 to 3, **characterised in that** the valve disc of the one valve (60) located on the fluid outlet (30) of the filter housing (22) projects to the outside over the latter, and the valve disc of the other valve (62) which is located on the fluid inlet (36) of the filter housing (22) is integrated into the latter.

5. The filter device according to any of Claims 1 to 4, **characterised in that** the fluid connections (30, 36) which can be assigned to the filter housing (22) are respectively encompassed on the outer peripheral side by an attachment part (64) which is used to attach the filter housing (22) to assignable flange parts (66) on the connecting plate (48) which faces it and which encompasses the respective fluid passages (52, 54).

6. The filter device according to Claim 5, **characterised in that** at least one locking part, preferably in the form of a locking pin (68) located on the attachment part (64) penetrates the assignable flange part (66) and engages a recess (72) in the blocking part (46) as soon as the latter assumes its open position.

7. The filter device according to any of Claims 1 to 6, **characterised in that** the blocking part (46) and the filter housing (22) are respectively provided with a handle (74, 76) for actuation or for a manual holding process.

8. The filter device according to any of Claims 1 to 7, **characterised in that** the filter housing (22) is made of cast aluminium and the blocking part (46) is made of a steel or plastic material.

## Revendications

1. Dispositif de filtration, comprenant au moins un élément (10) filtrant, qui peut être reçu dans un boîtier (22) de filtre, qui peut être mis en communication fluidique au moyen d'un dispositif (44) de raccordement du dispositif de filtration par des raccords (30, 36) pour du fluide avec un dispositif pour du fluide du dispositif de filtration, notamment sous la forme d'une cuve (40) hydraulique, le dispositif (44) de raccordement étant pourvu d'au moins une partie (46) d'obturation en tant que partie de celui-ci, qui, dans une position d'obturation, obture le raccord (30, 36) pour du fluide pouvant lui être associé respectivement et, après être venue dans une position d'ouverture, le dégage, **caractérisé en ce que** la partie (46) d'obturation est constituée sous la forme d'une partie coulissante en forme de plaque, qui est guidée avec possibilité de coulisser longitudinalement en étant rendue étanche au moyen d'un dispositif (50) d'étanchéité entre deux plaques (42, 48) de raccordement du dispositif (44) de raccordement, dont l'une (48) est tournée vers le boîtier (32) du filtre et l'autre (42) vers le dispositif (40) pour du fluide, **en ce que** l'on voit de l'extérieur sur la partie coulissante dans quelle position de fonctionnement elle est et **en ce que** les parties, pouvant être associées au boîtier (22) du filtre, des raccords (30, 36) pour du fluide sont pourvues respectivement d'une soupape (60, 62).

2. Dispositif de filtration suivant la revendication 1, **caractérisé en ce que** les raccords (30, 36) pour du fluide sont formés au moins en partie d'une entrée (36) pour du fluide et d'une sortie (30) pour du fluide dans le boîtier (22) du filtre, **en ce que** les plaques (42, 48) de raccordement sont pourvues, en tant que parties des raccords (30, 36) pour du fluide, de traversées (52, 54) pour du fluide qui y correspondent lesquelles, dans la position d'obturation de la partie (46) d'obturation, sont recouvertes par des parties (56) de parois de celle-ci et sont dégagées dans la position d'ouverture.

3. Dispositif de filtration suivant la revendication 2, **caractérisé en ce que** les deux points de raccordement du boîtier (22) du filtre sont, en tant que constituants des raccords (30, 36) pour du fluide, superposés dans la direction (34) longitudinale de ce boîtier, tout comme les passages (52, 54) pour du fluide dans les plaques (42, 48) de raccordement du dispositif (44) de raccordement, et **en ce que**, entre les parties (56) de paroi d'obturation de la partie (46) d'obturation, celle-ci comporte des ouvertures (58) de dégagement, qui, dans la position d'ouverture de la partie (46) d'obturation, sont à recouvrement fluidique avec les passages (52, 54) pour du fluide du dispositif (44) de raccordement.

4. Dispositif de filtration suivant l'une des revendications 1 à 3, **caractérisé en ce que** la tête de soupape d'une soupape (60) disposée à la sortie (30) pour du fluide du boîtier (22) de filtre dépasse de celui-ci vers l'extérieur et la tête de soupape de l'autre soupape (62) disposée à l'entrée (36) pour du fluide du boîtier (32) de filtre est intégrée dans celui-ci.

5. Dispositif de filtration suivant l'une des revendications 1 à 4, **caractérisé en ce que** les raccords (30, 36) pour du fluide qui peuvent être associés au boîtier (22) de filtre sont entourés respectivement du côté de la périphérie extérieure d'une partie (64) de fixation, qui sert à la fixation du boîtier (22) de filtre sur des parties (66) de bride pouvant être associées sur la plaque (48) de raccordement, qui est tournée vers lui, plaque qui entoure respectivement les passages (52, 54) pour du fluide.

6. Dispositif de filtration suivant la revendication 5, **caractérisé en ce qu'**au moins une partie de sécurité, de préférence sous la forme d'une tige (68) de sécurité disposée sur la partie (64) de fixation, traverse la partie (66) de bride qui peut être associée et pénètre dans un évidement (72) de la partie (46) d'obturation dès que celle-ci a pris sa position d'ouverture.

7. Dispositif de filtration suivant l'une des revendications 1 à 6, **caractérisé en ce que** la partie (46) d'obturation et le boîtier (22) du filtre sont pourvus, pour un actionnement ou pour une opération d'arrêt à la main, respectivement d'une poignée (74, 76).

8. Dispositif de filtration suivant l'une des revendications 1 à 7, **caractérisé en ce que** le boîtier (22) du filtre est en fonte d'aluminium et la partie (46) d'obturation est en acier ou en une matière plastique.
